# FASCICULE DE BREVET EUROPEEN

(11) **EP 2 834 741 B1**
(45) Date de publication et mention de la délivrance du brevet: **01.05.2019**
(21) Numéro de dépôt: 13713124.9
(22) Date de dépôt: 19.03.2013
(51) Int. Cl.: G06F 11/14, G06F 17/30

(54) **PROCÉDÉ DE MODIFICATION EN MÉMOIRE D'UN ENSEMBLE DE DONNÉES**
VERFAHREN ZUR SPEICHERINTERNEN MODIFIKATION EINES DATENSATZES
METHOD OF IN-MEMORY MODIFICATION OF A DATA SET

(30) Priorité: 02.04.2012 FR 1252989
(43) Date de publication de la demande: 11.02.2015
(73) Titulaire: Idemia Identity & Security France, 92400 Courbevoie (FR)
(72) Inventeur: LECOCQ, François, F-92130 Issy Les Moulineaux (FR); PEPIN, Cyrille, F-92130 Issy Les Moulineaux (FR)
(74) Mandataire: Cabinet Le Guen Maillet
(86) Numéro de dépôt international: PCT/EP2013/055737
(87) Numéro de publication internationale: WO 2013/149829

(56) Documents cités:
- WO-A1-01/31458
- WO-A2-2008/078207
- US-A1- 2008 320 253
- US-A1- 2009 164 750

## Description

La présente invention concerne le domaine de la gestion des écritures en mémoire d'un dispositif de traitement de l'information et plus précisément d'un procédé d'écriture d'un ensemble de données de manière unitaire et cohérente. L'invention, bien que de portée plus générale, s'applique plus particulièrement dans le domaine des cartes à puce (*smartcard* en anglais).

On souhaite éviter que l'écriture d'une donnée puisse être interrompue et que l'espace mémoire de la donnée se trouve dans un état transitoire non déterminé qui rende la donnée inutilisable.

On souhaite parfois écrire en mémoire un ensemble de données liées. Dans ce cas, les données doivent être écrites entièrement ou pas du tout. Il faut éviter que certaines données puissent être écrites et pas les autres.

On souhaite également parfois accumuler des modifications de données et ne valider l'ensemble de ces modifications que lorsqu'un événement se produit.

WO01/31458 décrit une approche particulière d'adresser ces problèmes dans le cas d'une erreur fatale du système non-spécifiée. Dans WO01/31458 plusieurs transactions peuvent modifier le même bloc mémoire en parallèle. Pour chacun des transactions, une copie du bloc est crée sur laquelle la modification est faite. Quand une transaction termine, le bloc modifié est recopié dans la mémoire et les modifications sont appliquées aux autres copies du même bloc mémoire, qui sont associées à d'autres transactions courant en parallèle.

L'invention vise à résoudre les problèmes précédents par un procédé d'écriture d'une ou plusieurs données dans la mémoire d'un dispositif de traitement de l'information qui comporte une étape de recopie d'un bloc mémoire dit d'origine comprenant la ou les données devant être écrites dans un bloc mémoire dit de sauvegarde. L'étape d'écriture des données est alors faite dans le bloc mémoire de sauvegarde. On peut alors toujours revenir si besoin aux valeurs des données originales si la phase d'écriture échoue.

L'invention concerne un procédé selon la revendication 1 comportant les étapes suivantes au sein d'un dispositif de traitement de l'information : une étape de définition d'un ou plusieurs blocs mémoires englobant les données devant être modifiées, l'espace mémoire contenant les données à modifier étant qualifié d'espace mémoire d'origine, le ou les blocs mémoires ainsi définis étant qualifiés de blocs mémoires d'origine ; une étape de recopie dans un espace mémoire qualifié d'espace mémoire de sauvegarde desdits blocs mémoires d'origine, les blocs ainsi modifiés étant qualifiés de blocs de sauvegarde ; une étape de modification des données au sein des blocs mémoires de sauvegarde et en cas de succès de l'opération de modification, une étape de recopie desdits blocs de sauvegarde sur les blocs d'origine afin d'assurer que les modifications de l'ensemble de données, que l'on qualifie de transaction, soient effectuées de manière unitaire.

Les espaces mémoires d'origine et de sauvegarde étant des espaces mémoires non volatiles, le procédé comporte en outre une étape de mémorisation en mémoire non volatile d'un état associé à chaque transaction parmi les états suivants : un état « hors transaction » lorsque la transaction n'est pas en cours ; un état « modifications en cours » dans lequel les modifications associées à la transaction sont en cours et un état « recopie en cours » dans lequel une recopie des blocs de sauvegarde sur les blocs d'origine est en cours et une étape de restauration lors du retour de l'alimentation électrique suite à une perte de celle-ci, qui consiste à recopier les blocs de sauvegarde sur les blocs d'origine si l'état sauvegardé est l'état « recopie en cours ».

Deux transactions présentant un chevauchement temporel et un chevauchement physique, c'est-à-dire que les blocs mémoires associés aux deux transactions se chevauchent, l'intersection définissant un bloc de chevauchement, le procédé comporte en outre une étape de calcul de la différence entre le bloc de chevauchement d'origine et celui issu des modifications apportées par la première transaction se terminant et une étape d'application de cette différence au sein du bloc mémoire de sauvegarde associé à l'autre transaction.

Selon un mode particulier de réalisation de l'invention, les blocs mémoires ont une taille fixe.

L'invention concerne également un dispositif de traitement de l'information selon la revendication 3.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre l'organigramme de fonctionnement d'un premier mode de réalisation de l'invention.
La Fig. 2 illustre l'organigramme de fonctionnement d'un second mode de réalisation de l'invention.
La Fig. 3 illustre la machine d'état utilisée dans un mode de réalisation de l'invention.

Les données manipulées par les dispositifs de traitement de l'information sont typiquement mémorisées dans des espaces mémoires. Ces espaces mémoires peuvent être vus comme des tableaux monodimensionnels d'éléments mémoires. Chaque élément mémoire contient un nombre défini de bits, le même pour tous les éléments mémoires. L'indice dans le tableau est défini comme l'adresse mémoire de l'élément. Les tailles des éléments mémoires couramment utilisées aujourd'hui font 32 ou 64 bits.

Une donnée est donc mémorisée dans un ou plusieurs éléments mémoires en fonction de sa taille. Ces éléments mémoires sont typiquement contigus. Lorsque l'on souhaite modifier une donnée, on provoque l'écriture de sa nouvelle valeur dans le ou les éléments mémoires où cette donnée est mémorisée.

On définit une transaction dans le cadre de ce document comme un ensemble d'écritures de données devant être réalisé de manière unitaire. On entend par là que cet ensemble d'écritures de données doit être soit réalisé entièrement soit pas du tout. On cherche à éviter qu'une écriture partielle de cet ensemble de données puisse survenir (par exemple, la mise à jour d'une donnée et de l'intégrité associée).

On appelle bloc de mémoire, un espace de mémoire contigu qui contient tout ou partie des données à écrire lors d'une transaction. Le bloc mémoire peut servir d'unité de manipulation de la mémoire pour le système de transition que l'on décrit. On peut définir la taille du bloc mémoire de différentes façons. Une première façon consiste à fixer la taille du bloc de manière statique au sein du système. Tous les blocs mémoires ont alors la même taille. La gestion des blocs de mémoire est alors facilitée, par contre il peut être nécessaire de travailler avec plusieurs blocs mémoires différents pour une même transaction. On parle couramment de pages mémoires au lieu de blocs mémoires dans le cas de blocs de taille fixe et de mémoire paginée.

La taille du bloc mémoire peut être variable et dépendante des données à modifier. On définit alors la taille du bloc comme le plus petit espace mémoire englobant les données d'une même transaction, et ce pour chaque transaction. La gestion est alors plus complexe, mais plus optimale en consommation de mémoire.

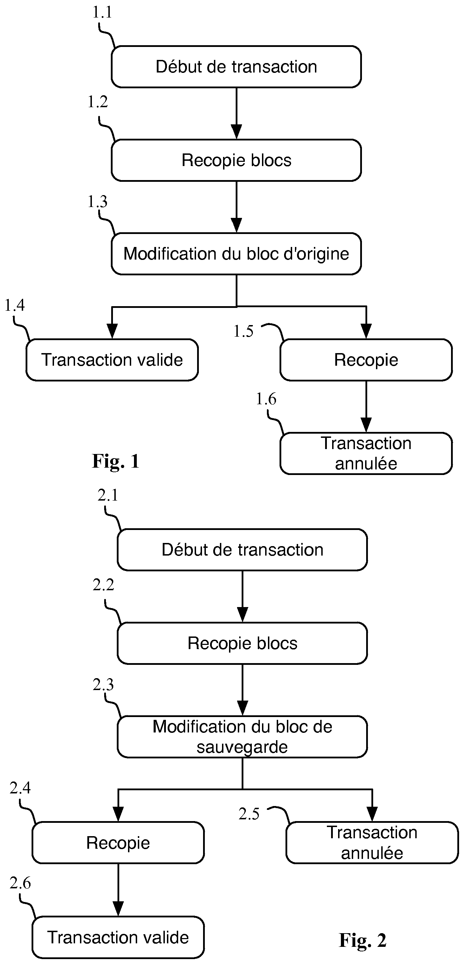

La Fig. 1 illustre un premier mode de réalisation qui ne fait pas partie de l'invention. Lors d'une première étape 1.1 on démarre la transaction. L'étape 1.2 consiste à recopier le ou les blocs mémoires qui contiennent les données concernées par la transaction. Ces données sont les données devant être modifiées de manière unitaire définissant la transaction. Pour chacun des blocs mémoires ainsi traités, on définit donc le bloc d'origine. Ce bloc d'origine est le bloc mémoire contenant la donnée à modifier. La copie du bloc mémoire d'origine est faite dans un espace mémoire que l'on qualifie d'espace mémoire de sauvegarde. On qualifie donc le bloc mémoire recopié de bloc mémoire de sauvegarde. À l'issue de cette étape, on dispose donc d'une copie identique du ou des blocs mémoires contenant les données à modifier.

Lors de l'étape 1.3 interviennent les modifications de données associées à cette transaction. Cette étape peut durer un certain temps et dépend de la définition de la transaction. Les écritures mémoires sont faites, dans ce premier mode de réalisation au sein de l'espace mémoire d'origine. Ce sont donc les blocs mémoires d'origine qui contiennent les données modifiées par la transaction.

Si rien ne vient perturber cette étape de modification des données, à l'issue de celle-ci intervient une validation de la transaction. On passe alors à l'étape 1.4. Les modifications de données ayant été faites directement dans l'espace mémoire d'origine, aucune intervention n'est nécessaire dans cet espace. La transaction se termine en étant validée, l'espace mémoire de sauvegarde peut être libéré.

À tout moment lors de cette étape de modification, il peut arriver que la transaction soit annulée. Les raisons de cette annulation dépendent de l'application et ne sont pas développées ici. Dans ce cas on passe à l'étape 1.5. La transaction n'ayant pu aboutir, il est nécessaire de restaurer l'espace mémoire d'origine dans l'état dans lequel il se trouvait avant le début de la transaction. L'étape 1.5 consiste donc à recopier le ou les blocs mémoires de l'espace de sauvegarde dans les blocs correspondants de l'espace mémoire d'origine. À l'issue de cette recopie, l'espace mémoire de sauvegarde peut être libéré.

On passe alors dans l'état 1.6 de fin de transaction. La transaction annulée n'a occasionné aucune modification de l'espace mémoire d'origine qui a été restauré.

On constate que le but que l'on s'était fixé, c'est-à-dire permettre à un ensemble d'écritures mémoires de s'effectuer de manière unitaire, est bien atteint.

La Fig. 2 illustre un second mode de réalisation qui constitue l'invention. Ce second mode est proche du premier. Les étapes 2.1 et 2.2 sont identiques à leurs pendants 1.1 et 1.2 du premier mode.

L'étape 2.3 diffère de l'étape 1.3 par le choix de l'espace mémoire dans lequel s'effectuent les modifications. Dans ce second mode de réalisation, le choix se porte sur l'espace mémoire de sauvegarde. L'étape de modification 1.3 laisse donc l'espace mémoire d'origine inchangé.

Ce choix impacte les opérations à entreprendre lors de la validation de la transaction et également lors de l'annulation.

Dans le cas d'une validation de la transaction, il est maintenant nécessaire d'effectuer une étape 2.4 de recopie de l'espace mémoire de sauvegarde vers l'espace mémoire d'origine de façon à reporter les modifications sur les données effectives stockées dans cet espace. L'étape 2.6 valide alors la transaction.

Dans le cas où la transaction est annulée, l'espace d'origine n'ayant pas été modifié, il n'y a aucune opération à entreprendre dans cet espace. L'espace mémoire de sauvegarde est libéré et la transaction se termine sur un état annulé lors de l'étape 2.5.

Ce mode de réalisation permet d'atteindre le même but que le premier, la différence majeure portant uniquement sur l'utilisation des blocs d'origine et de sauvegarde.

Il peut être avantageux d'offrir un mécanisme d'écritures mémoires qui soit également résistant à une rupture d'alimentation du dispositif. On doit alors distinguer deux types de fonctionnement de mémoire. Les mémoires utilisées dans un dispositif de traitement de l'information peuvent être du type volatile. Ce type de mémoire nécessite d'être alimenté électriquement pour mémoriser son contenu. Une perte d'alimentation conduit à une perte totale des informations mémorisées. Un second type de mémoire est constitué de mémoire du type non volatile. Dans ce cas, la perte de l'alimentation électrique n'entraîne pas la perte des données mémorisées. Les deux types de mémoire peuvent cohabiter au sein d'un même dispositif de traitement de l'information, c'est même le cas le plus général. Typiquement une carte à puce mémorise ses données dans une mémoire du type non volatile, mais dispose d'un espace de mémoire volatile de travail. En effet, le temps d'accès à la mémoire volatile est très nettement supérieur au temps d'accès à une mémoire non volatile.

Les deux premiers modes de réalisation fonctionnent quel que soit le type de mémoire. Si nous voulons les rendre résistants à une perte d'alimentation, il faut se préoccuper du type de mémoire à considérer. La résistance du mécanisme de transaction à une perte d'alimentation implique que l'espace mémoire d'origine soit en mémoire non volatile. En effet, dans le cas contraire, toutes les données sont perdues lors de la perte d'alimentation et l'invention n'a plus de sens. De la même façon, l'espace mémoire de sauvegarde doit également être en mémoire non volatile de façon à permettre une recopie de bloc suite à une rupture d'alimentation.

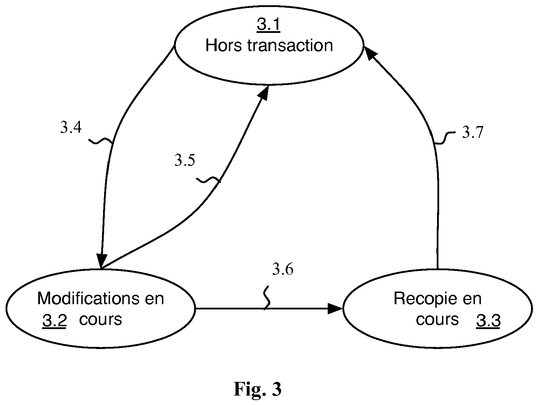

Pour rendre le mécanisme de transaction résistant à une perte d'alimentation, nous allons définir un automate d'état. Cet automate est décrit dans la Fig. 3. On définit un premier état 3.1 qui correspond à un état hors transaction. Dans cet état, aucune transaction n'est en cours. Un début de transaction 3.4 fait passer le système dans l'état 3.2 qui correspond à l'état dans lequel des modifications associées à une transaction sont en cours. On se place dans le cas du premier mode de réalisation où les modifications ont lieu dans l'espace mémoire d'origine. La validation de la transaction 3.5 nous ramène alors dans l'état hors transaction. Les modifications sont valides dans l'espace mémoire d'origine. Une annulation de la transaction 3.6 nous amène alors dans l'état 3.3 de recopie en cours. C'est l'état dans lequel la recopie de l'espace mémoire de sauvegarde vers l'espace mémoire d'origine intervient. Lors de la fin de la recopie 3.7, on passe dans l'état 3.1 hors transaction.

Dans le cas du second mode de réalisation où les modifications ont lieu dans l'espace mémoire de sauvegarde, l'automate est presque le même. Les seules différences sont une inversion des libellés 3.5 et 3.6. On passe dans l'état de recopie en cours sur une validation 3.6 de la transaction, l'espace mémoire de sauvegarde où ont eu lieu les modifications devant être alors recopié vers l'espace mémoire d'origine. C'est lors d'une annulation 3.5 de la transaction que l'on repasse directement à l'état 3.1 hors transaction.

Le procédé selon l'invention comporte alors en outre une étape de mémorisation en mémoire non volatile de l'état dans lequel on se trouve. De cette façon, quel que soit le moment où intervient une coupure d'alimentation, l'état du système par rapport à cet automate est mémorisé et peut être retrouvé lorsque le dispositif retrouve une alimentation électrique.

Le procédé comporte également en outre une étape de restauration lors du retour de l'alimentation. Cette étape de restauration va effectuer un ensemble d'opérations en fonction de l'état mémorisé du système et du mode de fonctionnement du mécanisme de transaction. Le mode de fonctionnement est le mode de modification en mémoire d'origine ou en mémoire de sauvegarde.

Si le système est dans l'état hors transaction, et ce quel que soit le mode de fonctionnement, il n'y a aucune opération à entreprendre.

Si le système est dans l'état modifications en cours et que les modifications ont lieu dans la mémoire d'origine, il faut recopier la mémoire de sauvegarde vers la mémoire d'origine pour annuler la transaction interrompue. Le système passe dans l'état recopie en cours pendant cette opération.

Si le système est dans l'état modifications en cours et que les modifications ont lieu dans la mémoire de sauvegarde, il n'y a rien à faire.

Si le système est dans l'état « recopie en cours », ne pouvant pas connaître l'état d'avancement de la recopie, celle-ci est reprise à zéro. On recopie donc intégralement l'espace mémoire de sauvegarde sur l'espace mémoire d'origine. Le système reste dans l'état recopie en cours.

À l'issue de cette étape, le système respecte bien la contrainte de la transaction, c'est-à-dire que l'ensemble des écritures liées à la transaction est réalisé entièrement ou pas du tout.

Ce système peut gérer tel quel un nombre quelconque de transactions. Il faut alors gérer autant d'automates d'états qu'il y a de transactions simultanées. On entend par transactions simultanées deux transactions ayant au moins un chevauchement temporel partiel. Une seule condition est cependant à respecter pour assurer un bon fonctionnement, il n'est pas possible d'avoir deux transactions ayant simultanément un chevauchement temporel et un chevauchement physique, le chevauchement physique signifiant que les blocs mémoires associés aux deux transactions se chevauchent. Cette restriction s'applique pour les deux modes de réalisation.

En effet, on prend alors le risque qu'une recopie de bloc effectuée par l'une des transactions vienne invalider des modifications faites par l'autre transaction. Prenons le cas où les modifications s'effectuent dans l'espace mémoire d'origine. Les deux transactions vont effectuer leurs écritures dans le même espace d'origine, ce qui ne pose pas de problème dès lors qu'elles ne cherchent pas à modifier un même élément mémoire. Toutefois, si l'une des transactions échoue, elle va recopier le bloc mémoire sauvegardé venant ainsi potentiellement annuler des modifications apportées par l'autre transaction.

Dans l'autre mode de fonctionnement, chaque transaction effectue la recopie de son bloc mémoire dans l'espace mémoire de sauvegarde. La partie commune se trouve donc dupliquée dans l'espace de sauvegarde. Chaque transaction effectue ses modifications sur sa copie. La première transaction qui se termine recopie son bloc mémoire dans l'espace d'origine. Lorsque la seconde transaction se termine, elle fait de même venant ainsi effacer les modifications apportées par la première transaction dans la partie commune. Cet inconvénient se produit même dans le cas où les deux transactions ne touchent pourtant pas les mêmes éléments mémoires, mais des éléments mémoires voisins situés dans la partie commune qui correspond à un même bloc mémoire.

Pour résoudre ce problème, on développe un nouveau mode de réalisation avantageux. Dans ce nouveau mode, on se restreint au fonctionnement des transitions où les modifications ont lieu dans l'espace mémoire de sauvegarde. Ainsi, lorsque deux transactions se chevauchent temporellement et physiquement, chacune des deux effectue sa propre copie du ou des blocs mémoires qui la concerne et chacune effectue ses modifications sur sa propre copie.

On définit la notion de bloc de chevauchement, l'espace mémoire commun aux blocs mémoires associés aux deux transactions.

Le procédé, selon ce mode de réalisation, comporte une étape supplémentaire qui intervient avant la recopie du bloc mémoire associé à la première transaction se terminant. Elle comporte une étape de calcul de la différence entre le bloc de chevauchement d'origine et celui issu des modifications apportées par la première transaction se terminant. Elle comporte également une étape d'application de cette différence au sein du bloc mémoire de sauvegarde associé à l'autre transaction.

Ainsi, les modifications apportées par la première transaction dans la partie commune sont reportées sur le bloc de travail de la seconde. La recopie de ce bloc de travail lors de la validation de la seconde transaction reportera donc les modifications apportées par la première transaction au lieu de les effacer dans l'espace mémoire d'origine. Si la seconde transaction échoue et que ce bloc n'est pas recopié en mémoire, les modifications faites par la première transaction qui ont été recopiées dans l'espace d'origine restent valides.

Le seul cas qui n'est pas adressé est le cas où les deux transactions viennent modifier différemment un même élément mémoire. Ce cas n'est, *a priori*, pas soluble, un même élément mémoire ne pouvant avoir deux valeurs différentes à l'issue des deux transactions. Dans ce cas, la modification de l'élément mémoire faite par la seconde transaction l'emportera.

Le lecteur comprendra que la gestion du bloc de chevauchement et du mécanisme de ce dernier mode de réalisation est grandement facilitée en cas de mémoire paginée et donc de blocs de taille fixe. Le bloc de chevauchement est alors constitué d'un nombre entier de pages.

## Revendications

1. Procédé de modification en mémoire d'un ensemble de données, comportant les étapes suivantes au sein d'un dispositif de traitement de l'information :
- une étape de définition d'un ou plusieurs blocs mémoires englobant les données devant être modifiées, l'espace mémoire contenant les données à modifier étant qualifié d'espace mémoire d'origine, le ou les blocs mémoires ainsi définis étant qualifiés de blocs mémoires d'origine ;
- une étape de recopie (2.2) dans un espace d'une mémoire non-volatile, espace qualifié d'espace mémoire de sauvegarde desdits blocs mémoires d'origine, les blocs ainsi définis étant qualifiés de blocs de sauvegarde ;
- une étape de modification des données (2.3) au sein des blocs mémoires de sauvegarde; et
- une étape de recopie dans l'espace mémoire d'origine (2.4) des blocs mémoires de sauvegarde ainsi modifiés;
- une étape de restauration mise en oeuvre lors du retour de l'alimentation dudit dispositif de traitement de l'information après une coupure de celle-ci ;
- une étape de mémorisation en mémoire non-volatile de l'état de transaction dudit dispositif de traitement de l'information, ledit état de transaction étant :
- un état dit « modifications en cours » (3.2) qui est mémorisé au début d'une transaction;
- un état dit « recopie en cours » (3.3) qui est mémorisé à l'issue d'une transaction lorsqu'elle a été validée et qu'une étape de recopie des blocs mémoires de sauvegarde modifiés dans l'espace mémoire d'origine a été lancée;
- un état dit « hors transaction » (3.1) qui est mémorisé à l'issue de ladite étape de recopie et lorsque ladite transaction a été ainsi validée ; ladite étape de restauration consistant à :
- si l'état mémorisé est l'état "hors transaction' (3.1) ', ne rien faire;
- si l'état mémorisé est l'état "modification en cours' (3.2) ', ne rien faire; et
- si l'état mémorisé est l'état "recopie en cours (3.3), recopier l'ensemble des blocs de données de l'espace mémoire de sauvegarde vers l'espace mémoire d'origine,
et en ce que, deux transactions présentant un chevauchement temporel et un chevauchement physique, c'est-à-dire que les blocs mémoires associés aux deux transactions se chevauchent, l'intersection définissant un bloc de chevauchement, le procédé comporte en outre les étapes suivantes réalisées avant l'étape de recopie dans l'espace mémoire d'origine des blocs mémoires de sauvegarde modifiés associés à la première transaction :
- une étape de calcul de la différence entre le bloc de chevauchement d'origine et celui issu des modifications apportées par la première transaction se terminant ;
- une étape d'application de cette différence au sein du bloc mémoire de sauvegarde associé à l'autre transaction.

2. Procédé selon la revendication précédente, **caractérisé en ce que** les blocs mémoires ont une taille fixe.

3. Dispositif de traitement de l'information, comportant pour la modification en mémoire d'un ensemble de données:
- des moyens pour définir un ou plusieurs blocs mémoires englobant les données devant être modifiées, l'espace mémoire contenant les données à modifier étant qualifié d'espace mémoire d'origine, le ou les blocs mémoires ainsi définis étant qualifiés de blocs mémoires d'origine ;
- des moyens pour recopier dans un espace d'une mémoire non-volatile, espace qualifié d'espace mémoire de sauvegarde desdits blocs mémoires d'origine, les blocs ainsi définis étant qualifiés de blocs de sauvegarde ;
- des moyens pour modifier des données au sein des blocs mémoires de sauvegarde; et
- des moyens pour recopier dans l'espace mémoire d'origine des blocs mémoires de sauvegarde ainsi modifiés;
- des moyens de restauration mis en oeuvre lors du retour de l'alimentation dudit dispositif de traitement de l'information après une coupure de celle-ci;
- des moyens pour mémoriser en mémoire non-volatile l'état de transaction dudit dispositif de traitement de l'information, ledit état de transaction étant :
- un état dit « modifications en cours » (3.2) qui est mémorisé au début d'une transaction;
- un état dit « recopie en cours » (3.3) qui est mémorisé à l'issue d'une transaction lorsqu'elle a été validée et que la recopie dans l'espace mémoire d'origine des blocs mémoires de sauvegarde modifiés a été lancée;
- un état dit « hors transaction » (3.1) qui est mémorisé à l'issue de ladite recopie et lorsque ladite transaction a été ainsi validée ;
lesdits moyens de restauration :
- si l'état mémorisé est l'état "hors transaction' (3.1) ', ne faisant rien;
- si l'état mémorisé est l'état "modification en cours' (3.2) ', ne faisant rien ; et
- si l'état mémorisé est l'état "recopie en cours (3.3), recopiant l'ensemble des blocs de données de l'espace mémoire de sauvegarde vers l'espace mémoire d'origine,
et en ce que, deux transactions présentant un chevauchement temporel et un chevauchement physique, c'est-à-dire que les blocs mémoire associés aux deux transactions se chevauchent, l'intersection définissant un bloc de chevauchement, le dispositif de traitement de l'information comporte en outre des moyens pour, avant de recopier dans l'espace mémoire d'origine des blocs mémoires de sauvegarde modifiés associés à la première transaction :
- calculer la différence entre le bloc de chevauchement d'origine et celui issu des modifications apportées par la première transaction se terminant ;
- appliquer cette différence au sein du bloc mémoire de sauvegarde associé à l'autre transaction.

## Patentansprüche

1. Verfahren zum Ändern einer Datenmenge in einem Speicher, umfassend die folgenden Schritte in einer Informationsverarbeitungsvorrichtung:
- einen Schritt zur Definition von einem oder mehreren Speicherblöcken, umfassend die zu ändernden Daten, wobei der die zu ändernden Daten enthaltende Speicherplatz als Ausgangsspeicherplatz qualifiziert wird und der somit definierte Speicherblock bzw. die somit definierten Speicherblöcke als Ausgangsspeicherblöcke qualifiziert werden;
- einen Schritt zum Kopieren (2.2) des als Speicherplatz zum Sichern der Ausgangsspeicherblöcke qualifizierten Platzes in einem Platz eines nichtflüchtigen Speichers, wobei die somit definierten Blöcke als Sicherungsblöcke qualifiziert werden;
- einen Schritt zum Ändern der Daten (2.3) in den Sicherungsspeicherblöcken; und
- einen Schritt zum Kopieren der somit geänderten Sicherungsspeicherblöcke in den Ausgangsspeicherplatz (2.4);
- einen Schritt zur Wiederherstellung, durchgeführt bei Wiederherstellen der Versorgung der Informationsverarbeitungsvorrichtung nach einer Unterbrechung von dieser;
- einen Schritt zum Speichern des Transaktionszustands der Informationsverarbeitungsvorrichtung im nichtflüchtigen Speicher, wobei der Transaktionszustand:
- ein mit "Änderungen im Gang" (3.2) bezeichneter Zustand ist, der zu Beginn einer Transaktion gespeichert wird;
- ein mit "Kopieren im Gang" (3.3) bezeichneter Zustand ist, der am Ende einer Transaktion gespeichert wird, wenn sie überprüft wurde und ein Schritt zum Kopieren der geänderten Sicherungsspeicherblöcke in den Ausgangsspeicherplatz gestartet wurde;
- ein mit "keine Transaktion" (3.1) bezeichneter Zustand ist, der am Ende des Schritts zum Kopieren, und wenn die Transaktion somit überprüft wurde, gespeichert wird; wobei der Schritt zum Wiederherstellen darin besteht:
- wenn der gespeicherte Zustand der Zustand "ohne Transaktion" (3.1) ist, nichts zu tun;
- wenn der gespeicherte Zustand der Zustand "Änderung im Gang" (3.2) ist, nichts zu tun; und
- wenn der gespeicherte Zustand der Zustand "Kopieren im Gang" (3.3) ist, alle Datenblöcke des Sicherungsspeicherblocks zum Ausgangsspeicherblock zu kopieren;
und darin, wenn zwei Transaktionen eine zeitliche Überlappung und eine physische Überlappung aufweisen, das heißt wenn sich die mit den zwei Transaktionen verknüpften Speicherblöcke überlappen, wobei der Schnittpunkt einen Überlappungsblock definiert, dass das Verfahren ferner die folgenden vor dem Schritt zum Kopieren der mit der ersten Transaktion verknüpften geänderten Sicherungsspeicherblöcke ausgeführten Schritte umfasst:
- einen Schritt zum Berechnen des Unterschieds zwischen dem Ausgangsüberlappungsblock und dem aus den durch die endende erste Transaktion durchgeführten Änderungen resultierenden;
- einen Schritt zum Anwenden dieses Unterschieds im mit der anderen Transaktion verknüpften Sicherungsspeicherblock.

2. Verfahren nach dem vorhergehenden Anspruch, **dadurch gekennzeichnet, dass** die Speicherblöcke eine feste Größe haben.

3. Informationsverarbeitungsvorrichtung, umfassend zur Änderung einer Datenmenge im Speicher:
- Mittel zum Definieren von einem oder mehreren Speicherblöcken, umfassend die zu ändernden Daten, wobei der die zu ändernden Daten enthaltende Speicherplatz als Ausgangsspeicherplatz qualifiziert wird und der somit definierte Speicherblock bzw. die somit definierten Speicherblöcke als Ausgangsspeicherblöcke qualifiziert werden;
- Mittel zum Kopieren des als Speicherplatz zum Sichern der Ausgangsspeicherblöcke qualifizierten Platzes in einem Platz eines nichtflüchtigen Speichers, wobei die somit definierten Blöcke als Sicherungsblöcke qualifiziert werden;
- Mittel zum Ändern der Daten in den Sicherungsspeicherblöcken; und
- Mittel zum Kopieren der somit geänderten Sicherungsspeicherblöcke in den Ausgangsspeicherplatz;
- Mittel zur Wiederherstellung, durchgeführt bei Wiederherstellen der Versorgung der Informationsverarbeitungsvorrichtung nach einer Unterbrechung von dieser;
- Mittel zum Speichern des Transaktionszustands der Informationsverarbeitungsvorrichtung im nichtflüchtigen Speicher, wobei der Transaktionszustand:
- ein mit "Änderungen im Gang" (3.2) bezeichneter Zustand ist, der zu Beginn einer Transaktion gespeichert wird;
- ein mit "Kopieren im Gang" (3.3) bezeichneter Zustand ist, der am Ende einer Transaktion gespeichert wird, wenn sie überprüft wurde und das Kopieren der geänderten Sicherungsspeicherblöcke in den Ausgangsspeicherplatz gestartet wurde;
- ein mit "keine Transaktion" (3.1) bezeichneter Zustand ist, der am Ende des Kopierens, und wenn die Transaktion somit überprüft wurde, gespeichert wird; wobei die Mittel zur Wiederherstellung:
- wenn der gespeicherte Zustand der Zustand "ohne Transaktion" (3.1) ist, nichts tun;
- wenn der gespeicherte Zustand der Zustand "Änderung im Gang" (3.2) ist, nichts tun; und
- wenn der gespeicherte Zustand der Zustand "Kopieren im Gang" (3.3) ist, alle Datenblöcke des Sicherungsspeicherblocks zum Ausgangsspeicherblock kopieren, und darin, wenn zwei Transaktionen eine zeitliche Überlappung und eine physische Überlappung aufweisen, das heißt wenn sich die mit den zwei Transaktionen verknüpften Speicherblöcke überlappen, wobei der Schnittpunkt einen Überlappungsblock definiert, die Informationsverarbeitungsvorrichtung ferner Mittel umfasst, zum, vor dem Kopieren der mit der ersten Transaktion verknüpften geänderten Sicherungsspeicherblöcke in den Ausgangsspeicherplatz:
- Berechnen des Unterschieds zwischen dem Ausgangsüberlappungsblock und dem aus den durch die endende erste Transaktion durchgeführten Änderungen resultierenden;
- Anwenden dieses Unterschieds im mit der anderen Transaktion verknüpften Sicherungsspeicherblock.

## Claims

1. Method of modifying in memory a set of data, comprising the following steps within an information processing device:
- a step of defining one or more memory blocks encompassing the data which are to be modified, the memory space containing the data to be modified being referred to as the original memory space, the memory block or blocks thus defined being referred to as original memory blocks;
- a step of copying (2.2) into a space of a non-volatile memory, a space referred to as the backup memory space, said original memory blocks, the blocks thus defined being referred to as backup blocks;
- a step of modifying the data (2.3) within the backup memory blocks; and
- a step of copying into the original memory space (2.4) backup memory blocks thus modified;
- a step of restoration implemented upon the return of the power supply to said information processing device following an outage thereof;
- a step of storing in non-volatile memory the transaction state of said information processing device, the said transaction state being:
- a so-called "modification in progress" state (3.2) which is stored at the start of a transaction;
- a so-called "copying in progress" state (3.3) which is stored on completion of a transaction when it has been validated and when a step of copying the modified backup memory blocks into the original memory space has been launched;
- a so-called "off-transaction" state (3.1) which is stored on completion of said copying step and when said transaction has thus been validated;
said restoration step consisting in:
- if the state stored is the "off-transaction" state (3.1), doing nothing;
- if the state stored is the "modification in progress" state (3.2), doing nothing; and
- if the state stored is the "copying in progress" state (3.3), copying all of the blocks of data from the backup memory space to the original memory space,
and in that, two transactions exhibiting a time overlap and a physical overlap, that is to say that the memory blocks associated with the two transactions overlap, the intersection defining an overlap block, the method furthermore comprises the following steps carried out before the step of copying into the original memory space the modified backup memory blocks associated with the first transaction:
- a step of calculating the difference between the original overlap block and that arising from the modifications made by the first transaction, which is terminating;
- a step of applying this difference within the backup memory block associated with the other transaction.

2. Method according to the preceding claim, **characterized in that** the memory blocks have a fixed size.

3. Information processing device comprising for the modification in memory of a set of data:
- means for defining one or more memory blocks encompassing the data which are to be modified, the memory space containing the data to be modified being referred to as the original memory space, the memory block or blocks thus defined being referred to as original memory blocks;
- means for copying into a space of a non-volatile memory, a space referred to as the backup memory space, said original memory blocks, the blocks thus defined being referred to as backup blocks;
- means for modifying data within the backup memory blocks; and
- means for copying into the original memory space backup memory blocks thus modified;
- means for restoration implemented upon the return of the power supply to said information processing device after an outage thereof;
- means for storing in non-volatile memory the transaction state of said information processing device, said transaction state being:
- a so-called "modification in progress" state (3.2) which is stored at the start of a transaction;
- a so-called "copying in progress" state (3.3) which is stored on completion of a transaction when it has been validated and when the copying of the modified backup memory blocks into the original memory space has been launched;
- a so-called "off-transaction" state (3.1) which is stored on completion of said copying and when said transaction has thus been validated;
said restoration means:
- if the state stored is the "off-transaction" state (3.1), doing nothing;
- if the state stored is the "modification in progress" state (3.2), doing nothing; and
- if the state stored is the "copying in progress" state (3.3), copying all of the blocks of data from the backup memory space to the original memory space,
and in that, two transactions exhibiting a time overlap and a physical overlap, that is to say that the memory blocks associated with the two transactions overlap, the intersection defining an overlap block, the information processing device furthermore comprises means for, before the copying into the original memory space of the modified backup memory blocks associated with the first transaction:
- calculating the difference between the original overlap block and that arising from the modifications made by the first transaction, which is terminating;
- applying this difference within the backup memory block associated with the other transaction.
